# EUROPÄISCHE PATENTANMELDUNG

(11) **EP 0 802 678 A2**
(43) Veröffentlichungstag der Anmeldung: **22.10.1997**
(21) Anmeldenummer: 97201010.2
(22) Anmeldetag: 07.04.1997
(51) Int. Cl.: H04N 7/26, H04N 7/36

(54) **Verfahren zur fraktalen Bildkodierung**

(30) Priorität: 19.04.1996 DE 19615490
(71) Anmelder: Philips Patentverwaltung GmbH, 22335 Hamburg (DE); PHILIPS ELECTRONICS N.V., 5621 BA Eindhoven (NL)
(72) Erfinder: Ibenthal, Achim, Röntgenstra e 24, 22335 Hamburg (DE); Götting, Detlef, Röntgenstra e 24, 22335 Hamburg (DE); Grigat, Rolf-Rainer, Prof.-Dr., Röntgenstra e 24, 22335 Hamburg (DE)
(74) Vertreter: von Laue, Hanns-Ulrich, Dipl.-Ing.

(57) **Zusammenfassung**

Für ein Verfahren zur fraktalen Bildkodierung, bei welchem zur Kodierung eines Bildes dieses in Rangeblöcke eingeteilt wird, die sich nicht überlappen und zusammen den Bildinhalt vollständig erfassen, bei welchem Domainblöcke aus dem Bildinhalt erzeugt werden, die jeweils Bereiche des Bildinhalts in ursprünglicher oder in transformierter Form enthalten, wobei alle Bereiche des Bildinhalts von wenigstens einem Domainblock erfaßt werden, bei welchem zu jedem Rangeblock derjenige Domainblock gesucht wird, der dem Domainblock am ähnlichsten ist, und bei welchem an Stelle der Daten der Rangeblöcke die Adressen der als jeweils als ähnlichsten gefundenen Domainblöcke und ggf. die bei deren Erzeugung angewendeten Transformationsfunktionen übertragen werden, ist zur Erzielung einer erhöhten Datenreduktion vorgesehen, daß daß bei einer Folge von Bildern die ausschließlich innerhalb der Bilder erfolgende fraktale Bildkodierung nur bei in wählbaren zeitlichen Abständen in der Bildfolge enthaltenen Basisbildern erfolgt, daß für zwischen den Basisbildern vorgesehene Zwischenbilder eine gleiche Range- und Domainblockeinteilung erfolgt wie für die Basisbilder und daß in einem Zwischenbild einzeln für jeden Rangeblock in einem Suchfeld derjenige Domainblock gesucht wird, der in dem vorigen Bild für den Rangeblock gleicher Position als ähnlichster ermittelt wurde, und daß, sollte dieser Domainblock in dem Suchfeld gefunden werden, dessen Verschiebungsvektoren relativ zu dem im vorigen Bild als ähnlichsten ermittelten Domainblock an Stelle der Adresse und ggf. der Transformationsfunktion übertragen werden.

## Beschreibung

Die Erfindung betrifft ein Verfahren zur fraktalen Bildkodierung, bei welchem zur Kodierung eines Bildes dieses in Rangeblöcke eingeteilt wird, die sich nicht überlappen und zusammen den Bildinhalt vollständig erfassen, bei welchem Domainblöcke aus dem Bildinhalt erzeugt werden, die jeweils Bereiche des Bildinhalts in ursprünglicher oder in transformierter Form enthalten, wobei alle Bereiche des Bildinhalts von wenigstens einem Domainblock erfaßt werden, bei welchem zu jedem Rangeblock derjenige Domainblock gesucht wird, der dem Domainblock am ähnlichsten ist, und bei welchem an Stelle der Daten der Rangeblöcke die Adressen der als jeweils als ähnlichsten gefundenen Domainblöcke und ggf. die bei deren Erzeugung angewendeten Transformationsfunktionen übertragen werden, sowie Enkoder und Dekoder zur Durchführung des Verfahrens.

Ein derartiges Verfahren zur fraktalen Bildkodierung ist aus "Image Coding Based on a Fractal Theorie of Iterated Contractive Image Transformation Arnand E. Jacuise, IEEE Transactions on Image Processing, Vol. 1(1), Seiten 18 bis 30, Januar 1992" bekannt. Bei diesem Verfahren wird jedes zur kodierende Bild in sogenannte Rangeblöcke zerlegt, für die Domainblöcke gesucht werden, die mit möglichst geringer Abweichung auf die Rangeblöcke abgebildet werden können. Die Domainblöcke werden ebenfalls aus dem Bildinhalt desselben Bildes gebildet. Bei diesem bekannten Verfahren wird die Suche eines möglichst ähnlichen Domainblockes einzeln für jeden Raingeblock des Bildes in jedem Bild durchgeführt. Damit ist für jedes Bild eine vollständige Kodierung aus Daten desselben Bildes erforderlich. Die Datenreduktion besteht darin, daß nicht die Daten der Rangeblöcke, also die Bilddaten an sich übertragen werden, sondern die Adresse des im Bild als ähnlichsten gefundenen Domainblocks sowie ggf. die bei dessen Erzeugung angewendete Transformationsfunktion. Bei dieser bekannten Kodierung wird immer nur auf Domainblöcke desselben Bildes, in dem die Rangeblöcke enthalten sind, eingesetzt.

Es ist Aufgabe der Erfindung, dieses bekannte Verfahren dahingehend weiterzuentwickeln, daß eine noch höhere Datenreduktion erzielt wird.

Diese Aufgabe wird erfindungsgemäß dadurch gelöst, daß bei einer Folge von Bildern die ausschließlich innerhalb der Bilder erfolgende fraktale Bildkodierung nur bei in wählbaren zeitlichen Abständen in der Bildfolge enthaltenen Basisbildern erfolgt, daß für zwischen den Basisbildern vorgesehene Zwischenbilder eine gleiche Range- und Domainblockeinteilung erfolgt wie für die Basisbilder und daß in einem Zwischenbild einzeln für jeden Rangeblock in einem Suchfeld derjenige Domainblock gesucht wird, der in dem vorigen Bild für den Rangeblock gleicher Position als ähnlichster ermittelt wurde, und daß, sollte dieser Domainblock in dem Suchfeld gefunden werden, dessen Verschiebungsvektoren relativ zu dem im vorigen Bild als ähnlichsten ermittelten Domainblock an Stelle der Adresse und ggf. de Transformationsfunktion übertragen werden.

Allgemein wird bei der fraktalen Bildkompression zur Kodierung eines Bildes dieses in sogenannte Rangeblöcke zerlegt. Die Rangeblöcke haben gleiche Größe, überlappen sich nicht und erfassen den gesamten Bildinhalt des Bildes. Aus den Daten des Bildes werden ferner sogenannte Domainblöcke erzeugt, die vorzugsweise mehr Bildpunkte beinhalten als die Rangeblöcke. Diese Domainblöcke bilden einen sogenannten Domainpool. Jeder Domainblock kann Bilddaten eines bestimmten Bildbereiches in ursprünglicher, vorzugsweise auch in transformierter Form enthalten. Bei dieser Transformation kann es sich beispielsweise um eine Drehung, eine Inversion, eine Reflexion etc. des ursprünglichen Bildinhaltes dieses Bildbereiches, aus dem der Domainblock erzeugt wird, handeln. Auf einen Bildbereich können für die Erzeugung verschiedener Domainblöcke verschiedene Transformationen angewendet werden. Damit kann also dieser Bildbereich in transformierter Form in verschiedenen Domainblöcken vorkommen. Dies hat zur Folge, daß die Zahl der Domainblöcke größer ist als die Zahl der Rangeblöcke.

Bei der Kodierung wird zu jedem Rangeblock des Bildes aus dem Domainpool derjenige Domainblock gesucht, dessen Bildinhalt dem Bildinhalt des Rangeblocks am ähnlichsten ist. Dabei muß ggf. die Größe der Domainblöcke an die der Rangeblöcke angepaßt werden. Für jeden Rangeblock werden die Adresse des als ähnlichsten gefundenen Domainblocks und die bei dessen Erzeugung ggf. angewendete Transformationsfunktion ermittelt. Dies geschieht für jeden Rangeblock einzeln. Ist das Bild vollständig kodiert, so ist für jeden Rangeblock des Bildes ein ähnlichster Domainblock gefunden worden. Statt der Daten der Rangeblöcke selbst werden die Daten der als ähnlichsten gefundenen Domainblöcke übertragen. Es werden jedoch nicht die Bildwerte dieser Domainblöcke übertragen, sondern die Adressen und die bei ihrer Erzeugung ggf. angewendeten Transformationsfunktionen. Diese Daten, bei denen es sich um die Daten der sogenannten fraktalen Bildkompression handelt, weisen eine deutlich geringere Datenmenge auf, als die Bildpunktdaten der Rangeblöcke des gesamten Bildes. Damit tritt eine beträchtliche Datenreduktion ein.

Dekodierungsseitig wird von der gleichen Einteilung des Bildes in Range- und Domainblöcke ausgegangen wie bei der Kodierung. Zur Dekodierung der Daten werden für jeden zu bildenden Rangeblock des wiederherzustellenden Bildes die Daten des zugeordneten ähnlichsten Domainblockes aus diesem Bild herangezogen. Die Adresse dieses Domainblockes ist übertragen worden. Die Daten dieses Domainblockes werden unter Anwendung der ggf. mit übertragenen Transformationsfunktion als neue Daten des Rangeblockes eingesetzt. Auf diese Weise werden die Daten jedes Rangeblockes des Bildes errechnet. Erstaunlicherweise kann hierbei von einem beliebigen Ausgangsbild ausgegangen werden, d.h. zur Berechnung der Rangeblöcke werden im ersten Schritt die Daten derjenigen Domainblöcke eines Bildes mit beliebigem Inhalt herangezogen, deren Adressen denjenigen Domainblöcken in dem ursprünglichen Bild entsprechen, die für die jeweiligen Rangeblöcke als die ähnlichsten gefunden worden waren und deren Adressen bzw. Transformationsfunktionen übertragen wurden. Es entsteht ein aus den Daten der adressierten Domainblöcke und der auf diese angewendeten Transformationsfunktionen rekonstruiertes Bild. Dieses im ersten Schritt erzeugte Bild entspricht zunächst noch nicht hinreichend dem ursprünglichen Bildinhalt des kodierten Bildes. Auf dieses im ersten Schritt rekonstruierte Bild wird der oben beschriebene Prozeß für die Dekodierung mehrfach wiederholt. Wichtig ist hierbei, daß bei jeder Wiederholung des Berechnungsprozesses jeweils die Daten des vorherigen Prozesses als Ausgangsdaten dienen. Es werden also aus dem beispielsweise im ersten Schritt rekonstruierten Bild die neuen Daten der Rangeblöcke und die neuen Daten der Domainblöcke für den nächsten Dekodierungsschritt verwendet. Bei der Dekodierung des nächsten Schrittes wird in gleicher Weise vorgegangen, so daß für jeden Rangeblock die Daten desjenigen Domainblocks, dessen Adresse übertragen wurde ggf. unter Anwendung der Transformationfunktion erzeugt werden. Dieser Prozeß wird mehrfach wiederholt. Das Funktionensystem muß dabei so ausgelegt sein, daß es konvergiert. Dies bedeutet, daß der Bildinhalt jedes Rangeblockes des zu rekonstruierenden Bildes sich mit jeder Anwendung des beschriebenen Rechenprozesses bei der Dekodierung dem ursprünglichen Bildinhalt, d.h. dem Bildinhalt des Bildes vor dessen Kodierung immer mehr annähert. Diese iterative Anwendung des Prozesses kann abgebrochen werden, wenn hinreichende Konvergenz erzielt ist, d.h. wenn der Bildinhalt des rekonstruierten Bildes sich dem Bildinhalt des ursprünglichen Bildes, dessen Adressen- und dessen Funktionsystem übertragen worden waren, hinreichend angenähert hat. Infolge der ausschließlichen Übertragung der Adressen und ggf. Transformationsfunktionen der Domainblöcke tritt eine erhebliche Datenreduktion ein, da die Bildpunktdaten weder der Rangeblöcke noch der Domainblöcke übertragen werden müssen.

Erfindungsgemäß ist nun zur Erzielung einer noch höheren Datenreduktion vorgesehen, daß die oben beschriebene fraktale Bildkodierung, die sich an den Bilddaten eines Bildes orientiert, nur für sogenannte Basisbilder vorgenommen wird. In einer Folge von Bildern sind diese Basisbilder in regelmäßiger Folge mit vorgebbaren Abständen vorgesehen. Für diese Basisbilder erfolgt die Kodierung wie oben beschrieben, d.h. es wird für jeden Rangeblock eines Basisbildes derjenige Domainblock desselben Basisbildes gesucht, der dem Rangeblock möglichst ähnlich ist.

Zwischen den in der Folge von Bildern übertragenen Basisbildern sind sogenannte Zwischenbilder vorgesehen. In diesen Zwischenbildern erfolgte eine gleiche Range - und Domainblockeinteilung wie für die Basisbilder.

Für die Kodierung der Zwischenbilder wird jedoch von dem Umstand Gebrauch gemacht, daß aufeinanderfolgende Bilder häufig ähnlichen Bildinhalt haben. Bei dem Verfahren nach dem Stande der Technik wurde ausschließlich eine sogenannte Intra-Frame-Kodierung vorgenommen, d.h. es wurde ausschließlich auf Daten desselben Bildes zurückgegriffen. Dabei wird eine Ähnlichkeit der Bildinhalte aufeinanderfolgender Bilder nicht genutzt. Bei der Erfindung wird bei der Kodierung der Zwischenbilder eine Inter-Frame-Kodierung vorgenommen, d.h. diese Ähnlichkeiten werden genutzt, um eine noch höhere Datenkompression zu erzielen.

Dabei wird erfindungsgemäß so vorgegangen, daß in einem Zwischenbild für jeden Rangeblock einzeln in einem vorgegebenen Suchfeld derjenige Domainblock gesucht wird, der in dem vorherigen Bild für den Rangeblock gleicher Position als ähnlichster ermittelt wurde. Hierbei wird nicht nur der Umstand genutzt, daß sich der Bildinhalt aufeinanderfolgender Bilder oft ähnelt, sondern es wird zusätzlich eine gewisse Bewegung im Bildinhalt zugelassen. Auch innerhalb des Suchfeldes an sich gleiche Bildinhalte der aufeinanderfolgenden Bilder, die sich jedoch bewegt haben, werden gefunden.

Ist beispielsweise für einen Rangeblock x₁ eines Bildes n₁ ein Domainblock y₁ als ähnlichster gefunden worden, so wird im nachfolgenden Bild n₂ für den Rangeblock x₂, der in diesem Bild gleiche Position hat wie der Rangeblock x₁ im Bild n₁, nach einem Domainblock mit einem Bildinhalt gesucht, der gleichen Bildinhalt hat wie der Domainblock y₁ des Bildes n₁. Dieser Suchvorgang wird innerhalb des Suchfeldes vorgenommen. Liegt keine Bewegung vor, so wird dieser Domainblock des Bildes n₂ gleiche Position haben wie der Domainblock y₁ des Bildes n₁. Liegt hingegen eine Bewegung vor, so wird in dem Suchfeld ein anderer Domainblock gefunden, der dem Domainblock y₁ im Bild n₁ entspricht, d.h. diesem vom Inhalt weitgehend ähnlich ist, jedoch etwas andere Position hat. In diesem Falle werden statt der Adresse und der bei dessen Erzeugung angewendeten Transformationsfunktion lediglich die Verschiebungsvektoren dieses Domainblockes relativ zu dem im vorherigen Bild für den gleichen Rangeblock als ähnlichsten ermittelten Domainblock übertragen. Wird also im Bild n₂ ein solcher Domainblock gefunden, der quasi gegenüber dem Domainblock des Vorbildes nur seine Position verändert hat, so entfällt das Erfordernis der Übertragung der Adresse und insbesondere der Transformationsfunktion. Es werden lediglich dessen Verschiebungsvektoren zu dem entsprechenden Domainblock des vorherigen Bildes übertragen. Damit wird eine noch höhere Datenreduktion erzielt.

Dieser Suchprozeß wird für jeden Rangeblock eines Bildes einzeln vorgenommen, d.h. es kann vorkommen, daß für einzelne Rangeblöcke eine Kodierung dieser Art, bei der lediglich die Verschiebungsvektoren übertragen werden, gelingt, daß jedoch für andere Rangeblöcke desselben Bildes dieses nicht gelingt und daher für diese Rangeblöcke eine Kodierung in normaler Form. d.h. mittels der Übertragung der Adresse und der Transformationsfunktion eines Domainblockes desselben Bildes vorgenommen werden muß. Da aufeinanderfolgende Bilder häufig ähnliche Bildinhalte, wenigstens in Bildbereichen, aufweisen, gelingt in der Praxis eine beträchtliche Datenreduktion.

Gemäß einer Ausgestaltung der Erfindung ist vorgesehen, daß, sollte für einen Rangeblock in dem Suchfeld derjenige Domainblock, der in dem vorigen Bild für den Rangeblock gleicher Position als ähnlichster ermittelt wurde, nicht gefunden werden, eine Helligkeits- und/oder Kontrastverschiebung des Bildinhalts der Domainblöcke vorgenommen wird und der Suchvorgang in dem Suchfeld wiederholt wird und daß, sollte mit der Helligkeits- und/oder Kontrastverschiebung der Domainblock gefunden werden, dessen Verschiebungsvektoren und die Änderungen von dessen Transformationsfunktion übertragen werden.

In dem oben beschriebenen Suchvorgang innerhalb des Suchfeldes wird ein Domainblock gesucht, der den Bildinhalt des im vorherigen Bild als ähnlichsten gefundenen Domainblocks weitgehend entspricht. Dies würde dann tatsächlich nicht gelingen, wenn zwar grundsätzlich der gleiche Bildinhalt vorhanden ist, dieser Bildinhalt jedoch eine unterschiedliche Helligkeit oder einen anderen Kontrast aufweist. Dies ist dann der Fall, wenn ein bestimmtes im Bild bewegtes Objekt wechselnden Beleuchtungsverhältnissen ausgesetzt ist. Um auch in diesem Falle die oben beschriebene gesteigerte Datenreduktion anwenden zu können, können die Daten der Domainblöcke einer Helligkeits- und/oder Kontrastverschiebung des Bildes unterzogen werden. Geschieht dies und ist der Bildinhalt tatsächlich ähnlich, hat jedoch nur andere Helligkeits- oder Kontrastwerte, so wird auch in diesem Falle in einem Zwischenbild ein Domainblock aufgefunden, der für den gleichen Rangeblock des vorherigen Bildes als ähnlichster ermittelt wurde. Es wird damit auch bei Helligkeits- oder Kontrastverschiebung des Bildinhaltes für eine zunehmende Zahl von Rangeblöcke möglich, nur noch die Verschiebungsvektoren und die Änderung der Transformationsfunktion anstelle der Adressen und vollständigen Transformationsfunktionen zu übertragen. Diese Vorgehensweise kann insbesondere so eingesetzt werden, daß zunächst ohne Anwendung der Helligkeits- und/oder Kontrastverschiebung in oben beschriebener Weise innerhalb des Bildes der ähnlichste Domainblock in dem Suchfeld gesucht wird. Sollte dieser nicht gefunden werden, so kann für die Domainblöcke eine Helligkeits- und/oder Kontrastverschiebung vorgenommen werden. Nachfolgend wird in dem Suchfeld der Suchvorgang mit diesen veränderten Domainblöcken nochmals vorgenommen.

Gemäß einer weiteren Ausgestaltung der Erfindung ist vorgesehen, daß sollte für den Rangeblock auch unter Anwendung der Helligkeits- und/oder Kontrastverschiebung des Bildinhalts in dem Suchfeld der gesuchte Domainblock nicht gefunden werden, das Suchfeld vergrößert wird und der Suchvorgang in dem vergrößerten Suchfeld wiederholt wird.

Sollte der oben beschriebene zweistufige Vorgang, bei dem zunächst in dem Suchfeld nach dem unveränderten Domainblock und anschließend nach dem bezüglich seiner Helligkeits- und/oder Kontrastwerte veränderten Domainblock gesucht wird, erfolglos bleiben, so besteht vorteilhafterweise die Möglichkeit, in einem dritten Schritt, der dann eingesetzt wird, wenn die beiden vorherigen Schritte erfolglos geblieben sind, zusätzlich das Suchfeld vergrößert und die oben beschriebenen Suchvorgänge in dem vergrößerten Suchfeld wiederholt.

Erst wenn diese drei Suchschritte erfolglos bleiben, würde in diesem Falle für einen Rangeblock eine Intra-Frame-Kodierung vorgenommen, d.h. es würde innerhalb desselben Bildes der ähnlichste Domainblock gesucht werden und dessen Adresse und Transformationsfunktionen würden übertragen werden.

Gemäß einer weiteren Ausgestaltung der Erfindung ist vorgesehen, daß in einem Zwischenbild einzeln für jeden Rangeblock in jeweils einem Suchfeld diejenigen Domainblöcke gesucht werden, die in dem vorigen Bild und in dem nachfolgenden Bild für den Rangeblock gleicher Position als ähnlichste ermittelt wurden, und daß, sollte einer dieser Domainblöcke in den Suchfeldern gefunden werden, dessen Verschiebungsvektoren relativ zu dem im vorigen bzw. nachfolgenden Bild als ähnlichsten ermittelten Domainblock an Stelle dessen Transformationsfunktion übertragen werden.

Die oben beschriebene Inter-Frame-Kodierung kann ggf. in beide Richtungen vorgenommen werden, d.h. für Rangeblöcke eines Bildes n kann in getrennten Suchfeldern jeweils für die im vorherigen Bild n-1 und im nachfolgenden Bild n+1 als ähnlichste gefundene Domainblöcke gesucht werden. Es wird hier also eine Ähnlichkeit der Bildinhalte sowohl für das vorherige wie auch für das nachfolgende Bild genutzt. Gegebenenfalls kann eine Ähnlichkeit in einem der Bilder eintreten, in dem anderen jedoch nicht. Dadurch wird eine weitere Steigerung der Datenkompression erzielt.

Das Suchfeld sollte sich an der innerhalb des Bildes maximal vorliegenden Bewegung orientieren. Hierzu ist gemäß einer Ausgestaltung der Erfindung vorgesehen, daß das Suchfeld wenigstens doppelt so groß gewählt ist wie die Bildpunktzahl, über die sich eine Bewegung im Bildinhalt erstreckt.

Gemäß einer weiteren Ausgestaltung der Erfindung ist vorgesehen, daß in der Bildfolge in Abständen von wenigstens einer Sekunde ein Basisbild vorgesehen ist. Damit wird für einen neu einsetzenden Dekodierungsvorgang die Wartezeit auf etwa eine Sekunde begrenzt, andererseits ist jedoch eine hinreichend große Zahl Zwischenbilder zwischen den Basisbildern vorgesehen, so daß die Datenreduktion hohe Werte erzielt.

Für einen Enkoder zur Durchführung des Verfahrens ist nach einer weiteren Ausgestaltung der Erfindung vorgesehen, daß nach erfolgter Kodierung eines Bildes die für die Rangeblöcke ermittelten Domainblöcke bzw. deren Verschiebungsvektoren zwischengespeichert werden, so daß sie für die Kodierung des nachfolgenden Bildes ggf. zur Ermittlung der Verschiebungsvektoren zur Verfügung stehen.

Um die oben beschriebene Inter-Frame-Kodierung vornehmen zu können, müssen bei der Kodierung eines Bildes n+1 die gefundenen Daten des vorherigen Bildes n zwschengespeichert werden. Dies geschieht mittels des Speichers, aus dem bei der Kodierung des Bildes n+1 die Daten des Bildes n ausgelesen werden können, so daß untersucht werden kann, ob in dem Bild n+1 der gesuchte Domainblock in dem Suchfeld wiedergefunden wird.

Eine weitere Ausgestaltung der Erfindung sieht für einen Dekoder zur Durchführung des Verfahrens vor, daß ein Speicher vorgesehen ist, in welchem nach erfolgter Dekodierung eines Bildes die für dieses übertragenen Daten zwischengespeichert werden, so daß sie für die Dekodierung des nachfolgenden Bildes zur Verfügung stehen.

In entsprechender Weise ist auch bei der Dekodierung für den Dekoder ein Speicher vorgesehen, der die Daten des vorherigen Bildes bereit hält, so daß sie für die Inter-Frame-Kodierung eingesetzt werden können.

Nachfolgend wird anhand der Zeichnung ein Ausführungsbeispiel näher erläutert. Es zeigen:
Fig. 1 eine schematische Darstellung der erfindungsgemäßen Inter-Frame-Kodierung bei der fraktalen Bildkompression für zwei aufeinanderfolgende Bilder,
Fig. 2 eine Darstellung entsprechend Fig. 1, bei der zusätzlich eine Helligkeits- und/oder Kontrastverschiebung von Teilen des Bildinhaltes vorliegt,
Fig. 3 eine schematische Darstellung einiger aufeinanderfolgender Bilder mit angedeuteter möglicher Interframekodierung in beiden Richtungen und
Fig. 4 eine schematische Darstellung eines Kodierungsvorganges für mehrere aufeinanderfolgende Bilder, wie er in einem Enkoder stattfinden kann.

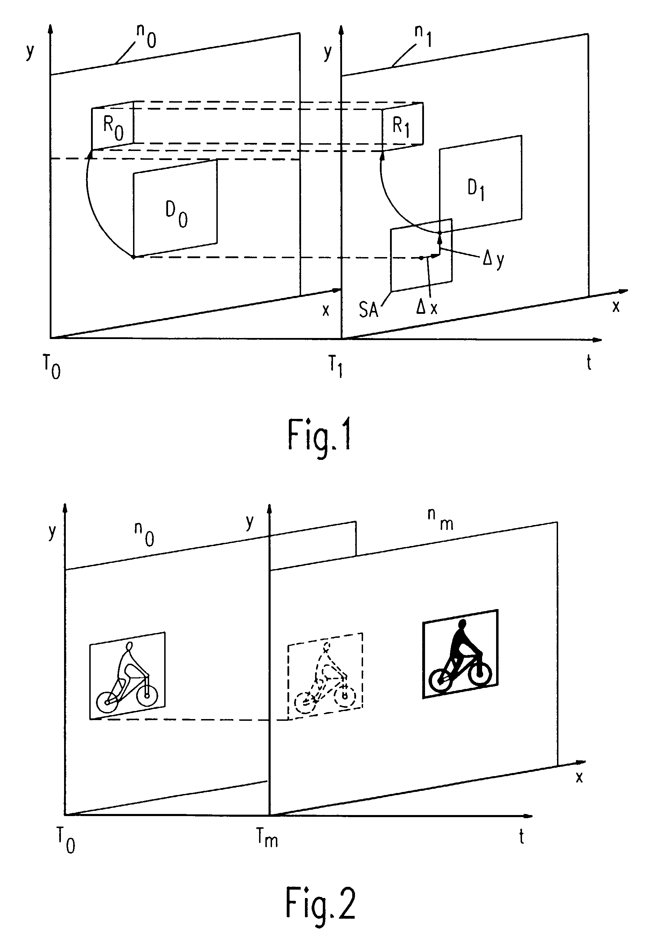

Die Fig. 1 zeigt in einer schematischen Darstellung zwei aufeinanderfolge Bilder n₀ und n₁, die zeitlich aufeinanderfolgend übertragen werden, wobei das Bild n₀ zu einem Zeitpunkt T₀ und das Bild n₁ zu einem Zeitpunkt T₁ übertragen wird.

Über der x- und über der y-Achse sind die Bilder schematisch aufgetragen, wobei in dem Bild n₀ schematisch ein Rangeblock R dargestellt ist. Für diesen Rangeblock ist ein ebenfalls im Bild n₀ angedeuteter Domainblock D als derjenige gefunden worden, der dem Bildinhalt des Rangeblockes R am ähnlichsten ist.

Bei dem Bild n₀ kann es sich um ein Basisbild oder ein Zwischenbild handeln. Handelt es sich um ein Basisbild, so ist dieser Domainblock D aufgrund der Suche innerhalb des Bildes n₀ als ähnlichster zu dem Rangeblock R gefunden worden. Handelt es sich um ein Zwischenbild, so kann dieser Domainblock D ggf. in einem Suchfeld gefunden worden sein.

Eine derartige Suche innerhalb eines Suchfeldes ist in der Fig. 1 anhand der schematischen Darstellung des Bildes n₁ näher dargestellt, bei dem es sich um ein Zwischenbild handelt.

Die schematische Darstellung gemäß Fig. 1 zeigt innerhalb des Bildes n₁ einen Rangeblock R₁, der innerhalb des Bildes n₁ die gleiche Position hat wie der Rangeblock R₀ innerhalb seines Bildes n₀.

Für den Rangeblock R₁ wird nun in einem Suchfeld SA derjenige Domainblock gesucht. der dem Domainblock D₀ im Bild n₀ entspricht, d.h. diesem weitestgehend ähnlich ist. Hat sich der Bildinhalt innerhalb des Domainblockes D₀ vom Bild n₀ auf Bild n₁ nicht bewegt, so würde dieser Domainblock an derselben Stelle im Bild n₁ gefunden werden, an der er im Bild n₀ war. In dem in Fig. 1 dargestellten Ausführungsbeispiel wird jedoch davon ausgegangen, daß der Bildinhalt im Bild n₁ gegenüber dem Bild n₀ sowohl eine geringfügige Bewegung in x-Richtung wie auch eine geringfügige Bewegung in y-Richtung vollzogen hat. Bei der Suche des Domainblockes innerhalb des Suchfeldes SA wird dieser in dem Bild n₁ daher an veränderter Position wiedergefunden. Diese veränderte Position ist in der schematischen Darstellung gemäß Fig. 1 mit Verschiebungsvektore Δx und Δy gekennzeichnet. Der an dieser veränderten Position gefundene Domainblock D₁ hat den gleichen Bildinhalt wie der Domainblock D₀ des Bildes n₀. Er ist daher dem Rangeblock R₁ sehr ähnlich, ebenso wie der Domainblock D₀ dem Rangeblock R₀ innerhalb des Bildes n₀. Erfindungsgemäß werden daher nicht die bei der Erzeugung des Domainblockes D₁ eingesetzten Transformationsfunktionen sowie die Adresse des Domainblockes übertragen, sondern es werden nur die Verschiebungsvektoren Δx und Δy zur Dekoderseite übertragen. Dekoderseitig ist anhand dieser Verschiebungsvektoren derjenige Domainblock D₁ ermittelbar, der eine um die Verschiebungsvektoren verschobene Position gegenüber dem Domainblock D₀ des Bildes n₀ aufweist. Damit können dekoderseitig für die Rekonstruktion des Rangeblockes R₁ die Daten des auf diese Weise auffindbaren Domainblockes D₁ eingesetzt werden.

Die Darstellung nach Fig. 2 zeigt in ähnlicher Weise wie die Darstellung gemäß Fig. 1 zwei aufeinanderfolgende Bilder. In diesem Falle handelt es sich um ein Bild n₀ und ein Bild nₘ. Im Bild n₀ kann beispielsweise für einen in der Darstellung gemäß Fig. 2 nicht angedeuteten Rangeblock ein Domainblock gefunden werden, der in der Zeichnung angedeutet ist und der als Bildinhalt einen Radfahrer aufweist.

In dem Bild nₘ, bei dem es sich um ein Zwischenbild handelt, kann dieser Radfahrer eine bestimmte Strecke zurückgelegt haben, d.h. die Position innerhalb des Bildes hat sich verändert. Damit taucht der Radfahrer nunmehr in einem anderen Domainblock auf. In der oben beschriebenen Weise kann dieser Domainblock grundsätzlich innerhalb eines Suchfeldes gefunden werden, so daß der Verschiebungsvektor dieses Domainblockes relativ zu der Position des Domainblockes in dem Bild n₀, das in der Darstellung für das Bild nₘ gestrichelt eingetragen ist, übertragen wird. Hierbei kann jedoch ggf. erschwerend hinzukommen, daß der Radfahrer in dem Domainblock des Bildes nₘ in anderer Helligkeit und/oder anderem Kontrast, beispielsweise durch andere Beleuchtung, auftaucht. Dieses ist in Fig. 2 durch den dunkler dargestellten Radfahrer angedeutet. Bei der oben beschriebenen Suche innerhalb des in Fig. 2 nicht angedeuteten Suchfeldes würde dieser Domainblock, der an sich den gleichen Bild inhalt aufweist wie der Domainblock des Bildes n₀, jedoch in anderer Helligkeit, nicht gefunden werden. Daher kann zusätzlich für den Domainblock des Bildes nₘ eine Helligkeits- und/oder Kontrastverschiebung vorgenommen werden. Dies führt dazu, daß die veränderte Helligkeits- und/oder Kontrastdarstellung des Radfahrers ausgeglichen wird. Es würde dann auch für den Beispielsfall gemäß Fig. 2 der an sich dunkler dargestellte Radfahrer in dem Domainblock des Bildes nₘ als vom Bildinhalt her ählich oder weitestgehend identisch mit dem heller dargestellten Radfahrer des Domainblockes des Teilbildes n₀ gefunden werden. Auch in diesem Falle kann trotz anderer Helligkeits- und/oder Kontrastwerte auf die Übertragung der Adresse und der Transformationstunktion des Domainblockes veränderter Position des Zwischenbildes nₘ verzichtet werden und es werden lediglich entsprechend der Darstellung gemäß Fig. 1 die aufgetretenen Verschiebungsvektoren des Domainblockes des Bildes nₘ relativ zu dem Domainblock des Bildes n₀ und die Veränderungen der Transformationsfunktion übertragen.

Damit wird für diesen Rangeblock die oben beschriebene Inter-Frame-Kodierung möglich, die weitere Daten einspart. Wesentlich hierbei ist, daß der Vorgang der Suche gemäß Fig. 1 zunächst mit unveränderten Domainblöcken vorgenommen wird. Erst wenn innerhalb des Suchfeldes der gesuchte Domainblock nicht gefunden wird, wird eine Helligkeits- und/oder Kontrastverschiebung entsprechend der Darstellung gemäß Fig. 2 vorgenommen. Bleibt auch diese Suche erfolglos, kann das Suchfeld vergrößert werden. Bleibt auch diese Suche erfolglos, so kann eine Intrafraimkodierung in üblicher Weise vorgenommen werden, d.h. es wird innerhalb des Bildes derjenige Domainblock gesucht, der dem Rangeblock am ähnlichsten ist und es werden dessen Adressen- und Transformationsfunktion übertragen.

Gegebenenfalls besteht natürlich die Möglichkeit, nicht alle diese drei Schritte vorzusehen, sondern beispielsweise bereits nach dem ersten Schritt, in dem in dem kleineren Suchfeld ohne Helligkeits- und/oder Kontrastverschiebung für einen Rangeblock kein verschobener Domainblock in dem Suchfeld gefunden wurde, sofort auf die Interfraimkodierung übergegangen werden. Dies kann auch ggf. erst nach dem zweiten Schritt geschehen, in dem eine Helligkeits- und/oder Kontrastverschiebung der Daten der Domainblöcke vorgenommen wurde.

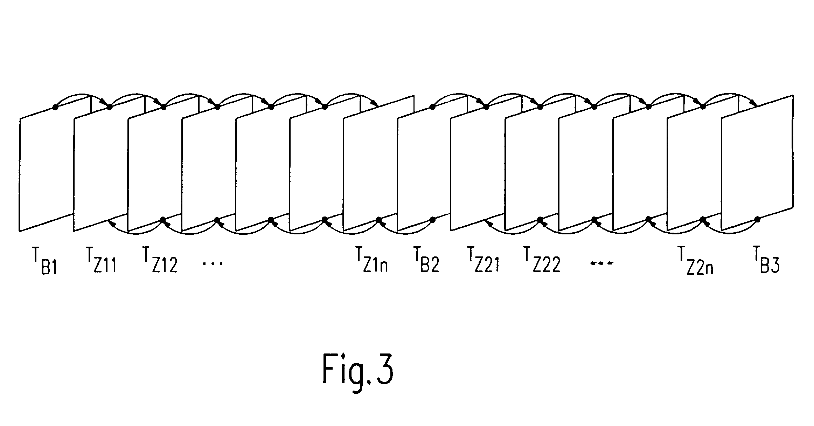

Die schematische Darstellung gemäß Fig. 3 zeigt eine Reihe aufeinanderfolgender Bilder. Dabei sind Basisbilder T_{B1}, T_{B2} und T_{B3} angedeutet. Der Bildfolge sollte wenigstens in einem Abstand von etwa einer Sekunde jeweils ein solches Basisbild übertragen werden. In der schematischen Darstellung gemäß Fig. 3 sind zwischen diesen Basisbildern übertragene Zwischenbilder T_{Z11}, T₁₂ bis T_{Z1n} sowie T_{Z21}, T_{Z22} bis T_{Z2n} angedeutet. Für diese Zwischenbilder kann eine Inter-Frame-Kodierung in oben beschriebener Weise erfindungsgemäß vorgenommen werden. Bei den obigen Beschreibungen wurde immer davon ausgegangen, daß für ein Bild n die Daten des vorherigen Bildes n-1, also die Daten des zeitlich zuvor übertragenen Bildes herangezogen werden. Eine derartige Inter-Frame-Kodierung ist jedoch auch in zeitlich umgekehrter Richtung möglich, so daß für ein Bild n die Daten des nachfolgend übertragenen Bildes n+1 herangezogen werden. In diesem Falle ist es erforderlich, die Daten der Bilder zwischenzuspeichern, so daß bei der Kodierung eines Bildes n bereits die Daten des Bildes n+1 vorliegen.

Die schematische Darstellung gemäß Fig. 3 zeigt, daß beispielsweise für die Zwischenbilder T_{Z11} bis T_{Z1n} zwischen den Basisbildern T_{B1} und T_{B2} eine solche Inter-Frame-Kodierung sowohl orientiert an dem jeweils zuvor wie auch an dem nachfolgend übertragenen Bild erfolgen kann. Damit wird eine noch höhere Datenreduktion erzielt, da beispielsweise der Bildinhalt des Zwischenbildes T_{Z11} dem Bildinhalt des Bildes T_{Z12} sehr ähnlich sein kann und damit verschobene Domainblöcke gefunden werden, jedoch ggf. zu dem Basisbild T_{B1} verschieden sein kann, beispielsweise über eine Umschaltung der Kamera stattgefunden hat. In diesem Falle könnte durch die Orientierung an dem nachfolgenden Bild die hohe Datenreduktion dennoch erzielt werden.

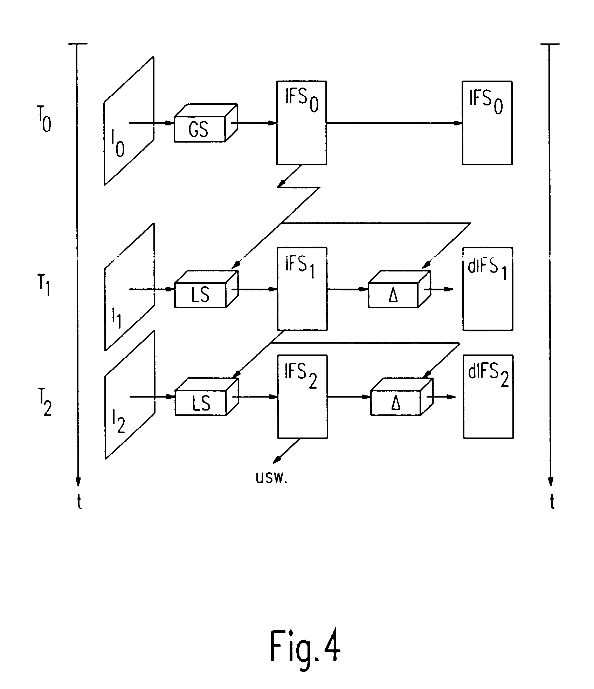

In der Darstellung gemäß Fig. 4 ist in schematischer Weise angedeutet, wie eine fraktale Bildkompression nach dem erfindungsgemäßen Verfahren enkoderseitig vorgenommen werden kann. Zum Zeitpunkt T₀ wird ein Bild I₀ übertragen, bei dem es sich um ein Basisbild handelt und bei dem für jeden Rangeblock dieses Bildes innerhalb desselben Bildes ein Domainblock gesucht wird, der den Bildinhalt des Rangeblockes am besten wiedergibt, d.h. diesem am ähnlichsten ist. Die Suche nach diesen Domainblöcken, in der Fig. 3 mit dem Funktionselement GS angedeutet, führt zu einem Funktionssystem IFS₀, das die Adressen und ggf. die bei deren Erzeugung eingesetzten Transformationen der als ähnlichsten gefundenen Domainblöcke enthält.

Ein nach diesem Basisbild übertragenes Zwischenbild I₁ wird zu einem Zeitpunkt T₁ übertragen. Für die Rangeblöcke dieses Zwischenbildes wird zunächst die oben beschriebene Suche nach verschobenen Domainblöcken vorgenommen. Dies wird mittels des Funktionselementes LS durchgeführt. Für diese Suche muß das Funktionensystem IFS₀ des vorherigen Teilbildes vorliegen. In einem Enkoder muß dieses daher zwischengespeichert sein.

In dem Funktionselement LS wird anhand der oben beschriebenen Suche in dem Suchfeld der ähnliche Domainblock gesucht. Wird er für einen Rangeblock gefunden, werden die Verschiebungsvektoren übertragen. Gegebenenfalls kann noch nach den weiteren oben beschriebenen Schritten, in denen eine Helligkeits- und/oder Kontrastverschiebung sowie eine Vergrößerung des Suchfeldes vorgenommen wird, weiter gesucht werden. Bleiben auch diese erfolglos, so wird eine Kodierung innerhalb des Bildes vorgenommen. Dieser Vorgang wird für jeden Rangeblock des Bildes I₁ einzeln vorgenommen.

Wird in dem Suchfeld ein verschobener Domainblock gefunden, so wird ein entsprechend neues Funktionensystem IFS₁ generiert, das die Adresse und die Transformationsfunktion dieses verschobenen Domainblockes angibt. Zur Erreichung der erhöhte Datenreduktion wird dieses Funktionensystem jedoch nicht übertragen. In dem Funktionsblock Δ wird stattdessen eine Berechnung der Verschiebungsvektoren der gefundenen Domainblöcke des Bildes I₁ relativ zu denen des Bildes I₀ generiert. Für diejenigen Rangeblöcke, für die diese Suche gelungen ist, werden nur die Verschiebungsvektoren dIFS₁ übertragen. Für diejenigen Rangeblöcke, für die diese Suche nicht gelungen ist, werden die Daten IFS₁ übertragen.

Die Suche kann auch zweistufig vorgenommen werden. Dabei wird, sollte die Suche eines Domainblockes für einen Rangeblock in dem Suchfeld nicht gelungen sein, zusätzlich eine Suche unter Helligkeits- und/oder Kontrastverschiebung vorgenommen. Die Suche wird wiederholt. Sollte unter Verschiebung der Helligkeits- und/oder Kontrastwerte ein Domainblock für den Rangeblock gefunden werden, so werden die Verschiebungsvektoren dIFS₁ und die Differenz der Helligkeits/Kontrastwerte übertragen. Auch hier gilt, daß für diejenigen Rangeblöcke, für die diese Suche nicht gelungen ist, die Daten IFS₁ übertragen werden.

Die Darstellung gemäß Fig. 4 zeigt einen weiteren Kodierungsschritt für ein nachfolgendes Bild I₂, für dessen Kodierung ebenfalls wieder auf die Daten des Funktionensystems IFS₁ des vorherigen Bildes zurückgegriffen wird. Es wird für dieses Bild in entsprechender Weise vorgegangen.

Diese Art der Enkodierung wiederholt sich für jedes Zwischenbild, bis wieder ein Basisbild übertragen wird, das ausschließlich intraframekodiert wird.

Auch die Darstellung gemäß Fig. 4 zeigt die Ursache der eintretenden Datenreduktion. Diese liegt darin, daß für die Zwischenbilder nicht immer und insbesondere nicht für jeden Rangeblock das vollständige Funktionensystem IFSₙ übertragen werden muß. Es genügt hingegen für die Rangeblöcke, für die ein verschobener Domainblock gefunden worden ist, nur die Verschiebungsvektoren als dIFSₙ zu übertragen.

Ein Enkoder kann vorteilhaft entsprechend der in Fig. 4 dargestellten Struktur aufgebaut sein, wobei die in Fig. 4 für die Enkodierung eines Bildes angedeuteten Funktionsblöcke nur je einfach vorgesehen sein müssen. Die Daten der Kodierung eines Bildes Iₓ werden in einem in Fig. 4 nicht angedeuteten Speicher für die Kodierung des nachfolgenden Bildes Iₓ₊₁ zwischengespeichert.

## Patentansprüche

1. Verfahren zur fraktalen Bildkodierung. bei welchem zur Kodierung eines Bildes dieses in Rangeblöcke eingeteilt wird, die sich nicht überlappen und zusammen den Bildinhalt vollständig erfassen, bei welchem Domainblöcke aus dem Bildinhalt erzeugt werden, die jeweils Bereiche des Bildinhalts in ursprünglicher oder in transformierter Form enthalten, wobei alle Bereiche des Bildinhalts von wenigstens einem Domainblock erfaßt werden, bei welchem zu jedem Rangeblock derjenige Domainblock gesucht wird, der dem Domainblock am ähnlichsten ist, und bei welchem an Stelle der Daten der Rangeblöcke die Adressen der als jeweils als ähnlichsten gefundenen Domainblöcke und ggf. die bei deren Erzeugung angewendeten Transformationsfunktionen übertragen werden, dadurch gekennzeichnet,
daß bei einer Folge von Bildern die ausschließlich innerhalb der Bilder erfolgende fraktale Bildkodierung nur bei in wählbaren zeitlichen Abständen in der Bildfolge enthaltenen Basisbildern erfolgt, daß für zwischen den Basisbildern vorgesehene Zwischenbilder eine gleiche Range- und Domainblockeinteilung erfolgt wie für die Basisbilder und daß in einem Zwischenbild einzeln für jeden Rangeblock in einem Suchfeld derjenige Domainblock gesucht wird, der in dem vorigen Bild für den Rangeblock gleicher Position als ähnlichster ermittelt wurde, und daß, sollte dieser Domainblock in dem Suchfeld gefunden werden, dessen Verschiebungsvektoren relativ zu dem im vorigen Bild als ähnlichsten ermittelten Domainblock an Stelle der Adresse und ggf. der Transformationsfunktion übertragen werden.

2. Verfahren nach Anspruch 1, dadurch gekennzeichnet,
daß, sollte für einen Rangeblock in dem Suchfeld derjenige Domainblock, der in dem vorigen Bild für den Rangeblock gleicher Position als ähnlichster ermittelt wurde, nicht gefunden werden, eine Helligkeits- und/oder Kontrastverschiebung des Bildinhalts der Domainblöcke vorgenommen wird und der Suchvorgang in dem Suchfeld wiederholt wird und daß, sollte mit der Helligkeits- und/oder Kontrastverschiebung der Domainblock gefunden werden, dessen Verschiebungsvektoren und die Änderungen von dessen Transformationsfunktion übertragen werden.

3. Verfahren nach Anspruch 1, dadurch gekennzeichnet,
daß, sollte für den Rangeblock auch unter Anwendung der Helligkeits- und/oder Kontrastverschiebung des Bildinhalts in dem Suchfeld der gesuchte Domainblock nicht gefunden werden, das Suchfeld vergrößert wird und der Suchvorgang in dem vergrößerten Suchfeld wiederholt wird.

4. Verfahren nach einem der Ansprüche 1 bis 3, dadurch gekennzeichnet,
daß, sollte für einen Rangeblock die Suche nach dem ähnlichsten Domainblock des vorigen Basisbildes erfolglos sein, für den betreffenden Rangeblock der ähnlichste Domainblock des aktuellen Bildes gesucht wird und dessen Adresse und ggf. die bei dessen Generierung eingesetzte Transformationsfunktion übertragen werden.

5. Verfahren nach einem der Ansprüche 1 bis 4, dadurch gekennzeichnet,
daß in einem Zwischenbild einzeln für jeden Rangeblock in jeweils einem Suchfeld diejenigen Domainblöcke gesucht werden, die in dem vorigen Bild und in dem nachfolgenden Bild für den Rangeblock gleicher Position als ähnlichste ermittelt wurden, und daß, sollte einer dieser Domainblöcke in den Suchfeldern gefunden werden, dessen Verschiebungsvektoren relativ zu dem im vorigen bzw. nachfolgenden Bild als ähnlichsten ermittelten Domainblock an Stelle dessen Transformationsfunktion übertragen werden.

6. Verfahren nach einem der Ansprüche 1 bis 5. dadurch gekennzeichnet,
daß das Suchfeld wenigstens doppelt so groß gewählt ist wie die Bildpunktzahl, über die sich eine Bewegung im Bildinhalt erstreckt.

7. Verfahren nach einem der Ansprüche 1 bis 6, dadurch gekennzeichnet,
daß in der Bildfolge etwa pro Sekunde ein Basisbild vorgesehen ist.

8. Enkoder zur Durchführung des Verfahrens nach einem der Ansprüche 1 bis 7, dadurch gekennzeichnet,
daß nach erfolgter Kodierung eines Bildes die für die Rangeblöcke ermittelten Domainblöcke bzw. deren Verschiebungsvektoren zwischengespeichert werden, so daß sie für die Kodierung des nachfolgenden Bildes ggf. zur Ermittlung der Verschiebungsvektoren zur Verfügung stehen.

9. Dekoder zur Durchführung des Verfahrens nach einem der Ansprüche 1 bis 7, dadurch gekennzeichnet,
daß ein Speicher vorgesehen ist, in welchem nach erfolgter Dekodierung eines Bildes die für dieses übertragenen Daten zwischengespeichert werden, so daß sie für die Dekodierung des nachfolgenden Bildes zur Verfügung stehen.
